# EUROPEAN PATENT SPECIFICATION

(11) **EP 0 999 157 B1**
(45) Date of publication and mention of the grant of the patent: **26.06.2002**
(21) Application number: 99203365.4
(22) Date of filing: 13.10.1999
(51) Int. Cl.: B65G 57/24, B65G 47/90

(54) **Palletization device for sets of associated products of various sizes and shapes**
Palettiervorrichtung für Sätze von einander zugeordenete Produkten unterschiedlicher Dimension und Form
Dispositif de palettisation pour des ensembles de produits associés par des dimensions et des formes différentes

(30) Priority: 29.10.1998 IT MI980696 U
(43) Date of publication of application: 10.05.2000
(73) Proprietor: OCME S.r.l., 43100 Parma (IT)
(72) Inventor: Gatteschi, Emanuele, 43100 Parma (IT)
(74) Representative: De Gregori, Antonella

(56) References cited:
- EP-A- 0 578 346
- US-A- 2 841 433
- US-A- 5 004 401
- US-A- 5 727 832

## Description

The present invention refers to a palletization device for sets of associated products of various sizes and shapes.

The problems that at present arise in the field of handling of products, in particular in palletization of products of various sizes and shapes, are known. It is in fact difficult to make a device that is capable of gripping properly and handling given quantities of products that are to be arranged stacked in a number of layers. It is pointed out that in what follows, the generic indication «products» identifies packages made up of a certain number of elements that are to be associated together to form a layer.

In particular, the biggest difficulty is encountered when the aim is to grip simultaneously a layer of large extension made up of soft and delicate products, which for this very reason cannot be squashed indiscriminately by the gripping element in order to obtain the frictional force required for holding the layer itself. It is therefore difficult to grip a layer of this kind automatically, and some of the products gripped may get dropped. Sometimes it is not possible to obtain complete blocking of the various products together, for example on account of the poor friction between one product and another, which enables their mutual displacement.

It is noted, in fact, that the problem lies precisely in achieving sufficient friction to enable the products to be kept in the pre-determined set, which varies each time as regards dimensions and number of component products.

US-A-2 841 433 shows an apparatus for handling materials having fixed elements which hang downwards.

A purpose of the present invention is that of making. a palletization device for sets of products of various sizes and shapes that may overcome the problems referred to above and that may be able to handle easily any layer of products set alongside each other.

A further purpose is that of making a palletization device that may be adaptable to the varying dimensions of the products that make up the set and/or layer.

These purposes according to the present invention are achieved by a palletization device for sets of associated products of various sizes and shapes according to Claim 1.

Further characteristics are set forth in the dependent claims.

Advantageously, the device according to the invention enables complete adjustment to the varying shapes and quantities of the products, allowing adaptation and a maximum variation of the position of the hanging elements or septa that are interposed between the products of the set or layer.

The characteristics and advantages of a device according to the invention will emerge clearly from the ensuing description, which is given simply to provide a non-limiting example, with reference to the attached schematic drawings, in which:
Figure 1 is a side elevation, partially sectioned, of a palletization device for products of various sizes and shapes according to the present invention, in a position in which it is raised above the products that are to be palletized;
Figure 2 shows a view similar to that of Figure 1, in which the device has been lowered over the set of products and has blocked the products inside it with the septum inserted between two products;
Figures 3, 4, 5, and 6 exemplify different arrangements, in plan view, of products that may be present in one layer, with the hanging elements or septa arranged and displaced according to the type of layer that it is desired to obtain for optimal arrangement of the pile; and
Figure 7 is a schematic plan view of an arrangement of products with a device equipped with four displaceable hanging elements.

With reference to the figures, a palletization device for sets of associated products of varying sizes and shapes is shown in one example of embodiment indicated by 10.

The device 10 may be used as palletization device for products 11, 11', which are associated together and set alongside each other and have various sizes and shapes suitable for forming a layer.

The device comprises a load-bearing structure consisting of a plate 12 to which are associated lateral wall elements that extend downwards. In the example shown, the lateral wall elements are indicated by 13, 13' and 13", and extend downwards from the plate 12, being vertically perpendicular or inclined so as to arrange themselves to form the sides of a hypothetical upturned-box area open downwards. There is of course present a fourth wall element (not shown), and the above-mentioned area can receive and gather together a certain number of associated products 11, 11' of various sizes and shapes set alongside each other to make up the layer. In the figures, these products are identified as sets of rolls of paper 9, particularly soft and compressible, but can be of any type.

On the top surface of the plate 12 is set an actuator assembly for displacement of the lateral wall elements. The actuator assembly may be of any type, and in the example shown it is made by means of a pair of actuators 14 and 14', for instance two motor reducers, designed so that they each control a respective rod 15 and 15'. The rod 15 engages with the respective actuator 14 in a central area of its own, whilst its opposite ends are provided with threaded portions 16 and 17. The threaded portions 16 and 17, one with a right-hand thread and the other with a left-hand thread, in turn engage operatively with complementary nut threads 18 and 19 associated, respectively, with the lateral wall element 13 and the lateral wall element 13'. The structure of the rod 15' is not shown, in that it is identical to the one just described.

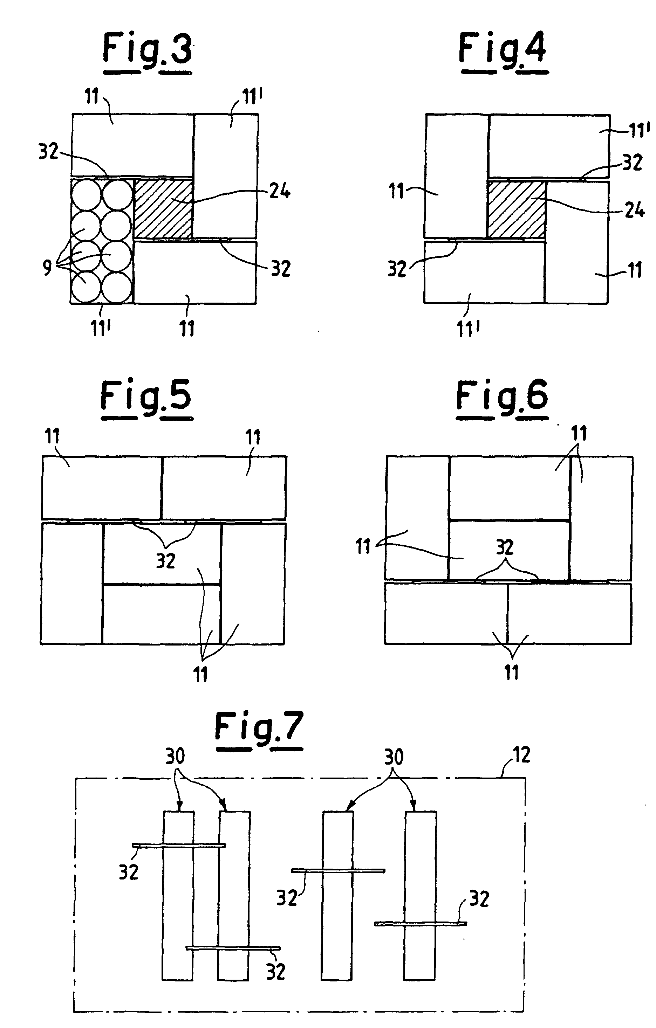

The plate 12 is provided with slots 20 within which the extensions of the lateral wall elements 13, 13' and 13" move to assume the various positions. From a bottom surface 21 of the plate 12 facing towards the inside of the box area thus defined there extend elements or septa 32 hanging downwards, only one of which is shown, for example of a rigid, plane type. Each one of these hanging elements 32 extends from any actuator assembly 30 whatsoever located so that it is fixed to the plate 12. The actuator assembly 30 may, for example, be of a pneumatic type, such as a cylinder without stem, or of a mechanical type, such as screw and nut screw, and in general it displaces the hanging element 32 in the palletization plane within the aforesaid area. The actuator assembly 30 may comprise a linear actuator 31, such as the aforementioned cylinder, and a rotational actuator, such as a stepper motor 34 which has a shaft 35 carrying the hanging element 32. Figures 3 and 4 show, in plan view, the positioning of two hanging elements 32.

It is natural that the device should be also equipped with a hooking or suspending element 23, fixed to the structure, that extends above it so as to support it to a bridge-type supporting assembly, or to a robot or to similar apparatus (not shown). The above-mentioned supporting assembly is able to displace the device in the various operating positions for gripping, releasing and displacing the products. This hooking or suspending element 23 may also be rotated both clockwise and counterclockwise through 180° or 90° so as to vary the position of one layer with respect to another in order to achieve cross-wise palletization or, respectively, so as to get the pallet to come out at an angle of 90° with respect to the area of preparation of the layer.

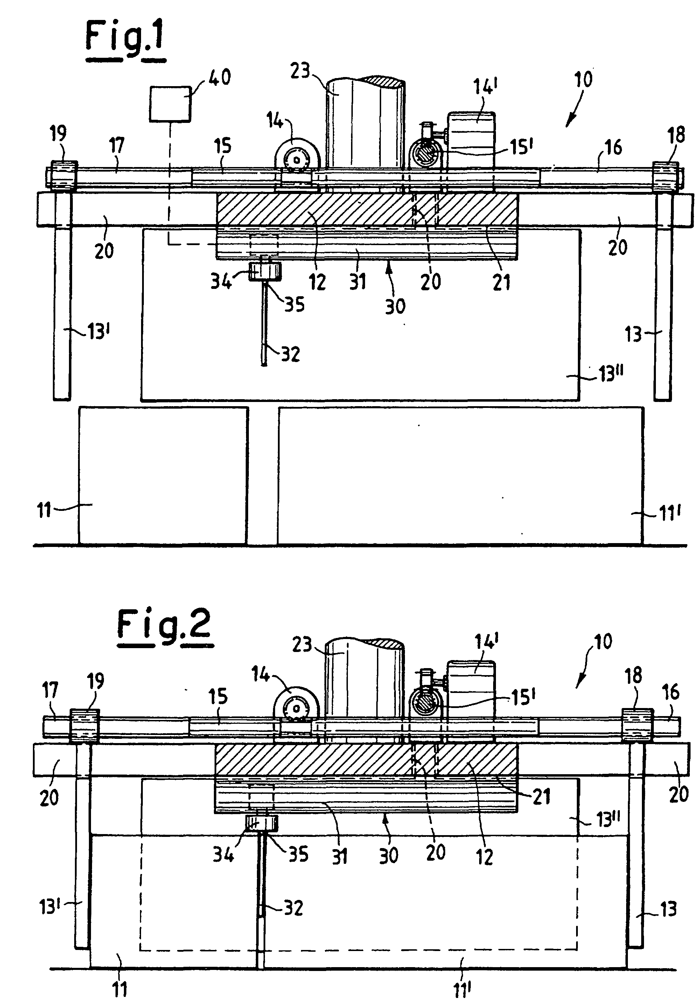

Figures 1 and 2 bring out the operation of the device of the present invention. Once a certain number of products 11, 11' having a given size have been arranged so as to form a set or layer of products, the device 10 is brought up above them ready for gripping them. It may be noted how, in this position (Figure 1), the wall elements 13, 13' and 13", as well as the fourth element, which is not shown, are in one first opened-out position designed to contain the products 11, 11' set alongside each other.

Figure 2 shows how, by lowering the hooking element 23, the device may be brought into a position immediately above, and almost in contact with, the products. The hanging element 32 shown is inserted between the products 11, 11' thanks to the displacement pre-determined by the actuator element 32, whilst the hanging element 32 is set as shown in Figure 3.

Figure 2 shows how the operation of the actuators 14 and 14' causes displacement of the lateral wall elements 13, 13' and 13" as they close in together around the products 11, 11', identifying a closed position in contact with the products, thus compacting them so that they can be gripped, this gripping operation being improved and ensured by the hanging elements 32, the positions of which can be adjusted. In order to maintain a constant gripping or compacting pressure, the use of a compensating element (not shown), for example of the pneumatic type, may be envisaged.

The device is thus ready for being raised again and for the set of products to be placed on a pallet, not shown, to create one first layer. In an equivalent way, the gripping and positioning device is operated so as to create one second layer, and successive layers until the pallet is completed according to the quantities desired and required.

In particular, as shown in Figures 3 and 4, it may be noted how the position of the two hanging elements or septa 32 varies for the formation of an even or an odd layer of a pile of products.

In fact, it may be noted how the two hanging elements or septa 32, from the position of Figure 3, for example corresponding to an even layer, are displaced linearly by means of the two corresponding actuator assemblies 30, so as to occupy the two gaps between the products 11, 11' which change position, for example in an odd layer illustrated in Figure 4.

In Figures 1 and 2 the lateral wall elements 13, 13' and 13" are set vertically straight, but, as has been said, they may also be inclined so that they converge together towards the centre of the device. If they are inclined, they force the products 11 and 11' to assume an arched arrangement, which improves the grip and stability of the products, also on account of the vertical resting components.

Figures 5 and 6 provide a top plan view of a different arrangement of two layers of products 11 and 11', this arrangement enabling either simply the device to be rotated through 180° to obtain even or odd layers, or the hanging elements 32 to be displaced by means of the actuator assemblies 30, so as to obtain the two arrangements shown in the various layers.

Finally, Figure 7 illustrates in plan view how it is possible to arrange, in a palletization device, the four actuator assemblies 30, each carrying its respective hanging element or septum 32.

With multiple arrangements of actuator assemblies 30 and corresponding hanging elements or septa 32, it is possible to handle without any problem products which have widely varying sizes and which in any case must maintain their stability both when they are gripped by the device and when they are stacked in the various layers one on top of another.

It is also emphasized that the device may moreover be equipped with an actuator for each wall element so as to achieve maximum flexibility of use of the device. A free type of arrangement according to the requirements is also facilitated by the introduction of spacer elements of any shape and size, shown schematically as 24, which will improve adherence between the products at the gaps, or the so-called stacks, that are formed.

In the examples, hanging elements 32 are shown which are all directed in the same direction, but, according to the same innovative concept, it is possible to envisage a number of hanging elements of various sizes to improve hold on the products.

It is once more emphasized how, by means of the device of the present invention, gripping of the products is achieved on all four sides of the layer, thus guaranteeing secure and stable gripping; this, of course, independently of the shapes of the products and of their mutual arrangement.

Advantageously, each hanging element 32 has an actuator assembly 30 of its own, and consequently can move forwards and backwards so as to stop precisely in the positions set each time for the individual layer by a computer 40 connected to the device.

By displacing the hanging elements 32, it is possible to insert them correctly between the products 11, 11', and this displacement is carried out each time for the various layers presenting different arrangements of the products.

In the case of the presence of a number of hanging elements or septa 32 mounted on the device, it is also possible to bring the septa one against another, or to displace them outside the area of encumbrance of the layer. In the latter case, during closing of the lateral wall elements, the septa 32 will come into contact with these elements without limiting their function of gripping and pushing the products.

In the case where a pneumatic actuator is used, it is possible, once the individual hanging element 32 has reached the position set, to discharge the air on both sides of the pneumatic cylinder, so as to block the hanging element in position, at the same time enabling it to slide along the axis of the cylinder, so adapting to the deformations of the packages when the wall elements close for gripping.

In a further alternative, which also falls within the innovative idea of the present invention, each hanging element or septum 32 could be mounted on two actuator assemblies, mutually orthogonal and associated so as to be able to move not only linearly but within the entire box-like area.

## Claims

1. Palletization device for sets of associated products of various sizes and shapes, comprising a load-bearing structure consisting of a plate (12) to which lateral wall elements (13, 13', 13") are associated, which extend downwards so as to define an upturned-box area open downwards such as to receive a certain number of products of various sizes and shapes (11, 11') set alongside each other so as to form a layer, the said lateral wall elements (13, 13', 13") being displaceable by means of at least one actuator (14, 14'; 15-19) between one position which contains a number of products simply set alongside each other and one closed position in contact with the number of compacted products, there being moreover provided between the said lateral wall elements (13, 13', 13") at least one element hanging downwards (32) **characterized in that** at least one element hanging downwards (32) is a rigid, plane element and can be moved by means of an actuator assembly (30) within the upturned-box area so as to assume any position whatsoever.

2. Device according to Claim 1, **characterized in that** the said actuator assembly (30) is provided with a linear actuator (31).

3. Device according to Claim 1 or Claim 2, **characterized in that** the said actuator assembly (30) is provided with a rotational actuator (34).

4. Device according to Claim 1, **characterized in that** the said lateral wall elements (13, 13', 13") are set inclined and converging together towards the centre of the said device.

5. Device according to Claim 1, **characterized in that** two or more elements hanging downwards (32) are envisaged, which can be moved by means of respective actuator assemblies (30).

6. Device according to Claim 1, **characterized in that** between the said number of products of various sizes and shapes (11, 11') set alongside each other to form a layer, a spacer element of any shape and size (24) is introducable.

7. Device according to Claim 1, **characterized in that** the said actuator assembly (30) is connected to a computer.

## Patentansprüche

1. Palletisiervorrichtung für Sätze von einander zugeordneten Produkten unterschiedlicher Dimensionen bzw. Größen und Formen, welche ein Lastaufnahme-Tragwerk aufweist, das eine Platte (12) aufweist, welcher seitliche Wandelemente (13, 13', 13") zugeordnet sind, welche sich so abwärts erstrecken, dass sie einen umgekehrten Schachtel- bzw. Kastenbereich bilden, welcher nach unten hin offen ist, so dass er eine bestimmte Anzahl von Produkten (11, 11') unterschiedlicher Dimensionen bzw. Größen und Formen aufnimmt, welche Seite an Seite zueinander so angeordnet sind, dass sie eine Schicht bilden, wobei die besagten seitlichen Wandelemente (13, 13', 13") verschiebbar bzw. versetzbar sind mittels wenigstens eines Betätigungsorgans bzw. wenigstens einer Betätigungseinrichtung (14, 14'; 15 - 19) zwischen einer Position, welche eine Anzahl von einfach Seite an Seite zueinander angeordneten Produkten enthält und einer geschlossenen Position im Kontakt bzw. in Berührung mit der Anzahl von verdichteten bzw. zusammengedrückten Produkten, wobei darüber hinaus zwischen den besagten Seitenwandelementen (13, 13', 13") wenigstens ein nach abwärts hängendes Element (32) vorgesehen ist,
**dadurch gekennzeichnet,**
**dass** wenigstens ein nach abwärts hängendes Element (32) ein starres, ebenes Element ist, und mittels eines Betätigungsorganaufbaus bzw. Betätigungseinrichtungsaufbaus (30) innerhalb des umgekehrten Schachtel- bzw. Kastenbereichs so bewegt werden kann, dass es eine jegliche Position einnehmen kann.

2. Vorrichtung gemäß Anspruch 1, **dadurch gekennzeichnet, dass** der Betätigungsorganaufbau bzw. der Betätigungseinrichtungsaufbau (30) mit einem linearen Betätigungsorgan bzw. einer solchen Betätigungseinrichtung (31) versehen ist.

3. Vorrichtung gemäß Anspruch 1 oder 2, **dadurch gekennzeichnet, dass** der besagte Betätigungsorganaufbau bzw. Betätigungseinrichtungsaufbau (30) mit einem Drehbetätigungsorgan bzw. einer Drehbetätigungseinrichtung (34) versehen ist.

4. Vorrichtung nach Anspruch 1, **dadurch gekennzeichnet, dass** die besagten seitlichen Wandelemente (13, 13', 13") zueinander geneigt und konvergierend zu der Mitte der besagten Vorrichtung hin eingestellt bzw. angeordnet sind.

5. Vorrichtung gemäß Anspruch 1, **dadurch gekennzeichnet, dass** zwei oder mehrere nach abwärts hängende Elemente (32) vorgesehen sind, welche mittels der jeweiligen Betätigungsorganaufbauten bzw. Betätigungseinrichtungaufbauten (30) bewegt werden können.

6. Vorrichtung gemäß Anspruch 1, **dadurch gekennzeichnet, dass** zwischen der besagten Anzahl von Produkten (11, 11') unterschiedlicher Dimensionen bzw. Größen und Formen, welche Seite an Seite zueinander zur Bildung einer Schicht angeordnet sind, ein Abstandselement (24) irgendeiner Form und Dimension bzw. Größe einführbar ist.

7. Vorrichtung gemäß Anspruch 1, **dadurch gekennzeichnet, dass** der besagte Betätigungsorganaufbau bzw. der besagte Betätigungseinrichtungaufbau (30) an einen Computer angeschlossen ist.

## Revendications

1. Dispositif de palettisation pour ensembles de produits associés de tailles et de formes différentes, comprenant une structure porteuse de charge constituée d'une plaque (12) à laquelle des éléments de parol (13, 13', 13") sont associés, qui s'étendent vers le bas de manière à définir une surface de boîte tournée vers le haut et ouverte vers le bas de manière à recevoir un certain nombre de produits de tailles et de formes différentes (11, 11') placés côte à côte de manière à constituer une couche, lesdits éléments de paroi (13, 13', 13") étant mobiles aux moyens d'au moins un actionneur (14, 14' ; 15-19) entre une position qui contient un certain nombre de produits simplement placés côte à côte et une position fermée en contact avec le nombre de produits compactés ; un élément au moins pendant vers le bas (32) étant en outre pourvu entre lesdits éléments de paroi latérale (13, 13', 13"), **caractérisé en ce qu'**au moins un élément pendant vers le bas (32) est un élément plat et rigide et peut être déplacé aux moyens d'un ensemble formant actionneur (30) à l'intérieur de la surface de la boîte tournée vers le haut, de manière à prendre une position quelconque.

2. Dispositif selon la revendication 1, **caractérisé en ce que** ledit ensemble formant actionneur (30) est pourvu d'un actionneur linéaire (31).

3. Dispositif selon l'une quelconque des revendications 1 ou 2, **caractérisé en ce que** l'ensemble formant actionneur (30) est pourvu d'un actionneur rotatif (34).

4. Dispositif selon la revendication 1, **caractérisé en ce que** lesdits éléments de paroi (13, 13', 13") sont placés de manière inclinée et convergent vers le centre dudit dispositif.

5. Dispositif selon la revendication 1, **caractérisé en ce que** deux éléments pendant vers le bas (32) ou plus, sont prévus, qui peuvent être déplacés aux moyens d'ensembles formant actionneur respectifs (30).

6. Dispositif selon la revendication 1, **caractérisé en ce qu'**entre ledit certain nombre de produits de tailles et de formes différentes (11, 11') placés côte à côte pour former une couche, un élément de séparation d'une forme et d'une taille quelconque (24) peut être introduit.

7. Dispositif selon la revendication 1, **caractérisé en ce que** ledit ensemble formant actionneur (30) est relié à un ordinateur.
